# EUROPEAN PATENT APPLICATION

(11) **EP 0 609 057 A2**
(43) Date of publication of application: **03.08.1994**
(21) Application number: 94300554.6
(22) Date of filing: 26.01.1994
(51) Int. Cl.: A01K 31/04, A01K 31/00

(54) **Chicken rearing apparatus**

(30) Priority: 27.01.1993 JP 29679/93
(71) Applicant: Hosoya, Minoru, Ayase-Shi, Kanagawa-Ken (JP)
(72) Inventor: Hosoya, Minoru, Ayase-Shi, Kanagawa-Ken (JP)
(74) Representative: Smith, Norman Ian

(57) **Abstract**

A chicken rearing apparatus (1), comprising an elongated floorless cage set (2), an endless floor belt apparatus (3) beneath the cage having an upper floor belt portion (10) with a plurality of holes (11) for manure to fall through, the floor belt portion forming the floor of the cage and being drivable longitudinally with respect to the cage, and a floorless lower belt portion (12) below the upper belt portion that has an opening (17), and a manure belt apparatus (4) formed by a belt (20) on which manure from the holes of the floor belt portion falls and which is drivable longitudinally with respect to the cage.

## Description

The present invention relates to a chicken rearing apparatus that provides chickens with food and water and processes chicken manure.

Broiler chickens have usually been raised by what is termed the floor feeding system, meaning that the chickens are fed on an earthen or concrete floor on which straw, sawdust or other such litter has been spread. With such a feeding system, the chickens develop a habit of supporting their weight by resting their chests on the floor, so the existence of any projections on the floor causes the birds to develop breast blisters. Not only do breast blisters reduce the commercial value of broiler carcasses, but in addition can become a site of infection that results in chickens falling prey to diseases while they are being reared.

Moreover, with the above floor feeding system the chicken manure gets mixed in with the litter and dries to form dustlike particles that get spread about in the air of the chicken house. As these particles contain bacteria and viruses that cause diseases in chickens, such diseases are spread to chickens that breathe in the particles. This is something that has to be remedied in order to improve the hygienic environment of chicken houses.

Chickens reared in a facility using the floor feeding system which are to be shipped out have to be caught and grouped together, which is done at night when they cannot see so well. In their efforts to catch the chickens rushing hither and thither, workers at the facility may become enveloped in particles of chicken manure, and may also breathe in these particles. As such, improving the hygiene of the working environment of the employees of such chicken houses has also become an issue of major importance.

The object of this invention is to provide a chicken rearing apparatus that provides a hygienic environment in which it is difficult for chickens to develop breast blisters and which also enables chickens to be readily collected when the rearing process is completed.

The chicken rearing apparatus according to this invention comprises: an elongated, floorless cage for housing chickens, an endless floor belt apparatus beneath the cage, formed of an upper floor belt portion with a plurality of holes for manure to fall through, said floor belt portion forming the floor of the cage and being drivable in a direction parallel with the longitudinal orientation of the cage, and a floorless lower belt portion that is located below the upper belt portion and has an opening, and a manure belt apparatus formed by a belt on which manure from the holes of the floor belt portion falls, said manure belt being drivable in a direction parallel with the longitudinal orientation of the cage.

In accordance with the above arrangement of the invention, the belt portion that forms the floor of the cage or cages is provided with holes through which chicken droppings fall onto the manure belt. These holes are large enough for chicken droppings to fall through but not large enough for the entry of chickens' feet. As there is no litter material on the floor belt portion or manure belt, the droppings merely solidify, and as the floor belt portion also acts as a cover for the manure belt, manure particles do not get spread into the air. When the chickens are shipped out the droppings that have accumulated on the manure belt can be cleaned off in one operation by driving the manure belt until the surface with the accumulated droppings passes through the opening of the floor belt portion and faces downwards on the opposite side, so the droppings fall off. While the floor belt has manure holes, in overall terms it is a flat sheet that does not give rise to breast blisters even if the chickens press their breasts against it.

Moreover, with the chicken rearing apparatus thus arranged, newborn chicks are place in the cages by putting the chicks on at the front end of the floor belt while moving the belt backwards, whereby the chicks can be readily conveyed right into the chicken house. Also, chickens can be shipped out (which is usually done at night) by moving the floor belt towards the door of the cage. Fear causes the chickens to stay immobile on the floor belt, so the chickens can be automatically loaded by positioning the shipping container so the opening thereof is in line with the door of the cage. There is therefore no need for the workers to move around to insert newborn chicks or to catch chickens for shipping, operations which are markedly improved over the conventional system in terms of both ease of accomplishment and the hygienic conditions of the working environment. A further point is that as the floor belt portion and manure belt are both movable, they can be readily washed and disinfected.

A preferred embodiment of the present invention will now be described in greater detail, by way of example only, with reference to the accompanying drawings in which:
Figure 1 is a perspective view of the overall arrangement of a chicken rearing apparatus according to an embodiment of the present invention; and
Figure 2 is a perspective view of the disassembled chicken rearing apparatus of Figure 1.

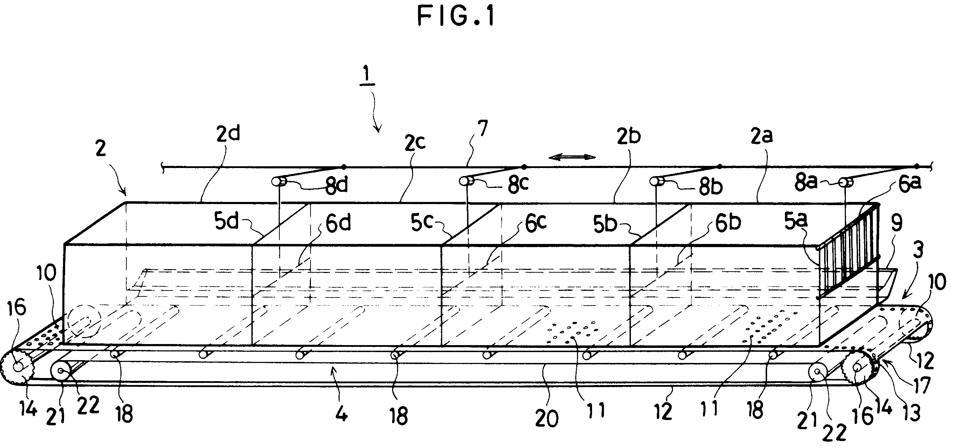

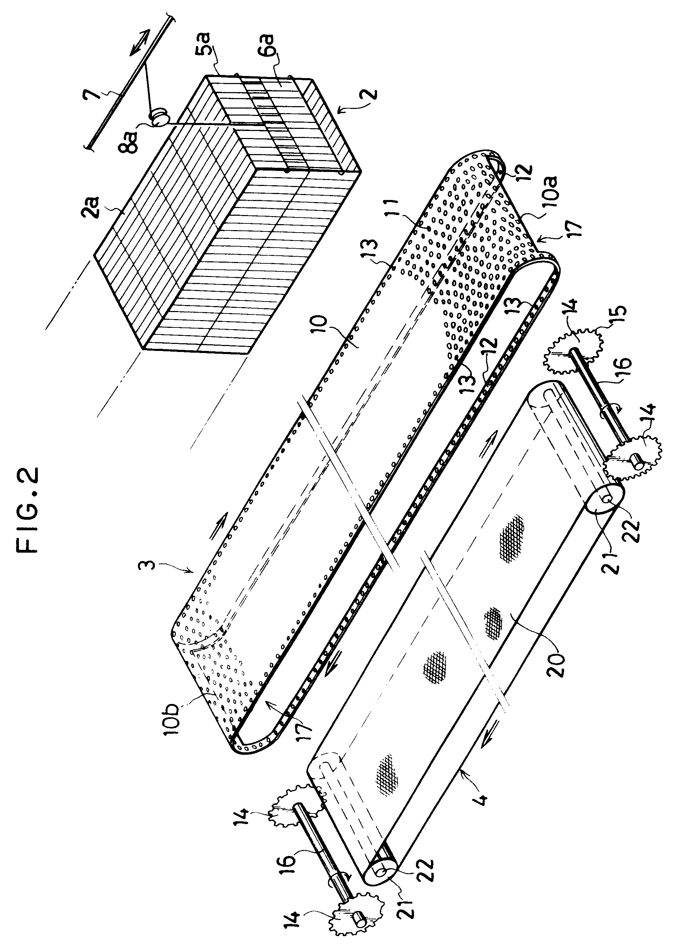

An embodiment of the chicken rearing apparatus according to the present invention will now be described with reference to Figures 1 and 2. As shown in the drawings, a chicken rearing apparatus 1 comprises a set of cages 2, a floor belt apparatus 3 and a manure belt apparatus 4. The set of cages 2 consists of a horizontal array of cages 2a to 2d each of which contains an appropriate number of chickens for rearing. The cages have a feed and water trough 9 that extends along the front of the cages parallel to the direction in which the cages are arrayed.

The chicken rearing apparatus 1 can be equipped with a feeder device, which is not shown. Such a feeder device could consist, for example, of a frame mounted on a wheel or wheels driven along a rail arranged above the set of cages 2 by a drive shaft arrangement, with a feed hopper or hoppers carried on the frame having dispenser pipes through which feed is dispensed into the trough 9. Such a feeder could be moved at 1 or 2 meters per minute to provide the cages with feed several times a day. The frame of the feeder device could also be provided with a bactericidal lamp for the cages. A suitable such lamp would be one that produces ultraviolet light with a powerful bactericidal effect, whereby the cages, food and water, chickens and so forth could be rid of most fungi and bacteria, such as salmonella, by exposure to short bursts of ultraviolet radiation from a close distance.

The cages 2a to 2d, which are not equipped with a floor, are separated by mesh or other such partitions 5a to 5d. The lower parts of the partitions 5a to 5d are provided with doors 6a to 6d. Chicks are introduced into the chicken rearing apparatus 1 through the end door 6a of the cage array. The doors 6a to 6d are supported by means of a wire 7 and pulleys 8a to 8d; pulling the wire 7 raises the doors to the open position, and allowing the wire 7 to return to its original position lowers the doors to the closed position. The cages 2a to 2d are supported independently of the floor belt apparatus 3 described below. In the illustrated embodiment the set of cages 2 is a plurality of cages formed by partitions, but it is to be understood that a single, long cage may be used having no partitions.

The floor belt apparatus 3 is provided with a floor belt portion and a drive section to drive the floor belt portion. The floor belt portion is an endless belt arrangement formed by connecting an upper floor belt portion 10 that forms the floor of the cages 2a to 2d, and a floorless belt portion 12 on the lower side of the floor belt portion 10.

The floor belt portion 10 is formed from a flat, flexible sheet such as thin steel sheet coated with a synthetic resin, and is perforated by numerous manure holes 11 in the flat belt portion. The manure holes 11 are each of a size that is large enough to allow chicken droppings to fall through but small enough to prevent the chickens' feet from falling in. For this, preferably the holes should each be around 10 to 20 mm in diameter, and the total area of the holes should be around 10 to 40 percent of the total area of the belt. While it does have the manure holes 11, in overall terms the floor belt portion 10 is a flat sheet that does not cause breast blisters even if the chickens press their breasts against it. Multiple support rollers 18 are arranged under the floor belt portion 10 to keep the floor surface more or less level. Each edge of the floor belt portion 10 is provided with a row of drive holes 13 having a prescribed pitch. Drive teeth 15 of floor belt drive wheels 14 can engage with the drive holes 13.

The floorless belt portion 12 has a large, central opening 17. Thus, the floorless belt portion 12 basically consists of two narrow belts, with the opening 17 in between. The drive wheels 14 are mounted on drive shafts 16 with drive teeth 15 engaging with drive holes 13. One of the drive shafts 16 is connected to a drive means such as an electric motor (not shown). What is formed is therefore a timing belt arrangement. Thus, using the drive means enables the floor belt portion to be moved backwards or forwards in parallel with the direction in which the cages are arrayed. As insufficient strength at the boundaries between the floor belt portion 10 and the floorless belt portion 12 could cause the floorless belt portion 12 to break, ends 10a and 10b may be reinforced with steel strips or the like.

The manure belt apparatus 4 is arranged directly beneath the floor belt portion 10, encased, as it were, within the floor belt. The manure belt apparatus 4 consists of an endless manure belt 20, cylindrical drive wheels 21 which drive the manure belt 20 through frictional contact, drive shafts 22 of the manure belt drive wheels 21, and a drive means (not shown) that is connected to one of the drive shafts 22. The manure belt 20 is a broad, flat, endless belt with no holes.

In accordance with the above arrangement, the droppings of chickens raised on the floor belt portion 10 will fall through the manure holes 11 onto the manure belt 20 below. Unlike in the conventional floor feeding system, no litter is used either on the floor belt portion 10 or the manure belt 20, so the droppings that collect on the manure belt 20 merely solidify. The floor belt portion 10 also acts as a cover over the manure belt 20, so the air in the chicken facility does not become contaminated by particles of manure getting scattered about. Furthermore, when the chickens are shipped out the accumulated droppings on the manure belt 20 can be cleaned off in one operation by driving the manure belt 20 around through the opening 17 of the floorless belt portion 12 until the surface with the droppings is facing downwards on the underside and the droppings fall off. The droppings thus removed can be loaded in a special container and sent to a processing plant or other such facility. As the manure belt 20 can be washed and disinfected while it is being rotated, such tasks can be readily accomplished even with a manure belt that is 70 or 80 meters long.

To insert newborn chicks in a set of cages 2, the doors 6a to 6d between the cages 2a to 2d are raised to connect the interiors of the cages. Then, the floor belt portion 10 is rotated so that the end 10b is moving towards the end cage 2d as the newborn chicks are being placed on the floor belt. When the end 10b reaches the far end of cage 2d, the floor belt is stopped and the doors 6a to 6d are lowered, with chicks housed in each of the cages. The same basic operation may also be used to place chicks in a single cage configuration without partitions.

Chickens that have been raised are collected at night for shipping by raising the doors 6a to 6d of the cages high enough to allow the chickens to move through the line of cages. The floor belt portion 10 is then driven to move it towards the door 6a of the cage at the end of the line. This frightens the chickens and causes them to stand immobile on the floor belt portion 10 rather than flap about. Therefore, by aligning the opening of the container in which the chickens are to be shipped with the door of the cage, the chickens can be automatically loaded as they come to the end of the belt and topple into the shipping container. Thus, with the chicken rearing apparatus of this invention the chickens can be easily collected for shipping without the chicken house workers having to move around catching the chickens, so the working environment is far more hygienic than in the case of a conventional arrangement. In the case of a windowless facility, the chickens could also be collected in the daytime.

The washing and disinfecting of the floor belt portion, following the removal of the chickens, are tasks that can be facilitated if carried out while the belt is being rotated.

It is to be understood that the arrangement of the embodiment described above is not limitative, and that any other arrangement that accomplishes the object without departing from the scope of the invention may be used.

While in the above embodiment the manure belt arrangement is located within the floor belt portion arrangement, instead the manure belt arrangement could for example be disposed below the floor belt portion, or below on the outside of the floor belt portion. In the same way, while the above embodiment was described with reference to the rearing of broiler chickens, the invention is not limited thereto and may be applied to the rearing of chickens for egg-laying purposes.

As has been described in the foregoing, in the chicken rearing apparatus arranged in accordance with this invention, a belt that forms the floor of a cage is provided with numerous holes that are large enough for chicken droppings to fall through but not large enough for the chickens' feet to enter, and the droppings fall through the holes onto a manure belt. As no litter material is used on the floor belt portion or on the manure belt, the droppings merely solidify, and as the floor belt portion also acts as a cover for the manure belt, particles of manure do not get spread into the air. Furthermore, when the chickens are shipped out the droppings on the manure belt can be cleaned off in one operation by rotating the manure belt around until the surface with the droppings is facing downwards on the underside and the droppings fall off.

While manure holes are formed in the floor belt portion, in overall terms it is a flat sheet that does not cause breast blisters in chickens which press their breasts against it.

The chickens can be shipped out at night by moving the floor belt towards the door of the cage. Fear causes the chickens to stay immobile on the floor belt, so the chickens can be automatically loaded by positioning the shipping container so the opening thereof is in line with the door of the cage. The chickens can therefore be easily collected and loaded without the workers having to move around, which is a marked improvement over the conventional arrangement with respect to both ease and hygienic conditions of the working environment.

## Claims

1. A chicken rearing apparatus (1), comprising:
an elongated, floorless cage (2) for housing chickens;
an endless floor belt apparatus (3) beneath the cage formed of an upper floor belt portion (10) having a plurality of holes (11) for manure to fall through, said floor belt portion forming a floor of the cage and being drivable in a direction parallel with a longitudinal orientation of the cage, and a floorless lower belt portion (12) that is located below the upper belt portion and has an opening (17); and
a manure belt apparatus (4) formed by a belt (20) on which manure from the holes of the floor belt portion falls, said manure belt being drivable in a direction parallel with a longitudinal orientation of the cage.

2. The chicken rearing apparatus according to claim 1, wherein the cage is divided by partitions each having a door in the lower part thereof.

3. The chicken rearing apparatus according to claim 1, wherein the manure belt is an endless belt.

4. The chicken rearing apparatus according to claim 1, wherein the manure belt apparatus is located between the upper floor belt portion and floorless lower belt portion of the floor belt apparatus.

5. The chicken rearing apparatus according to claim 1, wherein each of the plurality of holes is of a size that does not allow entry of a leg of a chicken.

6. The chicken rearing apparatus according to claim 1, wherein the total area of the plurality of holes is within 10 to 40 percent of the total area of the floor belt portion.
